# EUROPEAN PATENT APPLICATION

(11) **EP 1 940 167 A1**
(43) Date of publication of application: **02.07.2008**
(21) Application number: 06782589.3
(22) Date of filing: 03.08.2006
(51) Int. Cl.: H04N 7/173, H04N 7/26

(54) **DIGITAL BROADCAST RECEIVER**

(30) Priority: 20.09.2005 JP 2005272105
(71) Applicant: Pioneer Corporation, Tokyo 153-8654 (JP)
(72) Inventor: ASAKAWA, Taro c/o Pioneer Ohmori Plant, Tokyo 1430015 (JP); ABE, Yoshinori c/o Pioneer Ohmori Plant, Tokyo 1430015 (JP); HAYASHI, Yukio c/o Pioneer Ohmori Plant, Tokyo 1430015 (JP); TAKAHASHI, Koji c/o Pioneer Ohmori Plant, Tokyo 1430015 (JP)
(74) Representative: Manitz, Finsterwald & Partner GbR
(86) International application number: PCT/JP2006/315773
(87) International publication number: WO 2007/034634

(57) **Abstract**

A digital broadcast receiver receives a TS carrier signal transmitted from a digital broadcast station, and reproduces a video and audio signal contained in the received TS carrier signal. This digital broadcast receiver has a demodulation unit that obtains a TSP sequence by demodulating the received TS carrier signal. This demodulation unit detects at least one erroneous TSP containing a transmission error. The digital broadcast receiver also has a demultiplexer that separates a video TSP and the erroneous TSP from the TSP sequence as a video TSP sequence, and converts the video TSP sequence to an ES sequence after replacing one or a plurality of continuous erroneous TSP with a single unique data fragment. The digital broadcast receiver also has a video decoder that restores the video signal by carrying out decoding of the ES sequence. This video decoder carries out error processing in accordance with detection of the unique data fragment.

## Description

### TECHNICAL FIELD

The present invention relates to a digital broadcast receiver that receives a TS carrier signal transmitted in MPEG-2 TS (Moving Picture Coding Experts Group-2 Transport Stream) protocol employed in digital broadcast standards so as to reproduce information such as video, audio and text data.

### BACKGROUND ART

The MPEG-2 TS protocol employed in digital broadcast standards is an MPEG protocol for compressing multiple programs into a single data sequence, and allows synchronization of video and audio, transmission of multiple programs, and transmission of text data and the like other than video and audio data.

As is described in the Digital Broadcasting Textbook - Volume 1, October 11, 2004, Impress Japan Corporation, video data and audio data are referred to as an elementary stream (ES) in the MPEG-2 system, and these data are packetized into units referred to as packetized elementary stream (PES). Information indicating presentation time in the form of a presentation time stamp (PTS) is added to a PES header during PES packetization. In the case of MPEG-2 video, a stamp indicating the decoding time in the form of a decoding time stamp (DTS) is also added. In the MPEG-2 system, video and audio data are synchronized using these items of time stamp information. Multiple PES are divided and multiplexed into TS packets (referred to as TSP) having a fixed length of 188 or 204 bytes to further improve the efficiency of transmissions. PES are packetized so as to serve as the first byte of TSP. The head of the PES never starts from an intermediate location in the payload of a TSP.

A digital broadcast receiver of a viewer is normally provided with a demodulation unit for obtaining MPEG-2 TSP by demodulating a TS carrier signal, a transport stream demultiplexer (referred to as TSD) for multiplexing and separating a TS stream into an audio ES and a video ES, and an audio data decoding unit and a video data decoding unit for restoring audio data and video data by decoding the separated audio ES and video ES using an appropriate codec.

Since TS carrier signals are transmitted by a wireless or wired transmission path, transmission errors occur depending on the communication status of the transmission path, resulting in an erroneous TSP. Here, an erroneous TSP refers to a TSP in which a post-correction error is detected when the demodulation unit has decoded a Reed-Solomon code (204, 188), and 1 is set for the transport error indicator of the TS header. The TSD determines whether or not a TSP in question is an erroneous TSP, based on the value of the transport error indicator.

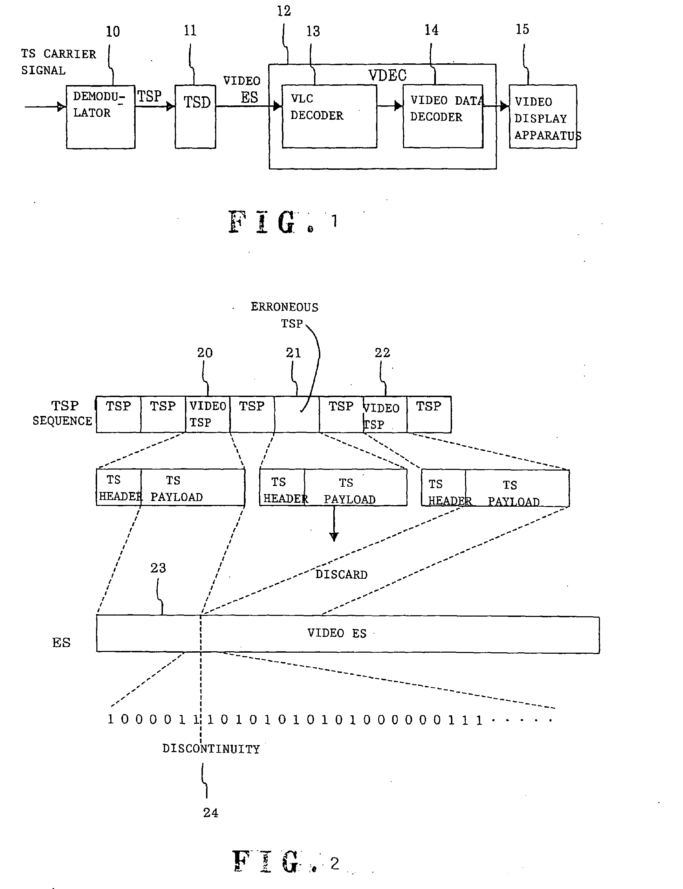

FIG. 1 of the attached drawings illustrates a configuration example of a digital broadcast receiver system. FIG. 2 of the attached drawings illustrates an example of video ES 23 detachment by a TSD 11.

If a digital broadcast receiver of the prior art is used and its functional block for the decoding process includes TSD 11 and video decoder 12 (referred to as VDEC 12) separately, then video ES 23 detachment from an TSP having a video PID (to be referred to as a video TSP) when TSD 11 has detected an erroneous TSP 21 is carried out, with either the erroneous TSP 21 being discarded or the erroneous TSP 21 being treated in the same manner as an error-free TSP. Subsequent decoding by VDEC 12 is unable to detect a discontinuity 24 or an error that has occurred as a result of having discarded erroneous TSP 21 in video ES 23. Therefore, decoding of VDEC 12 does not proceed normally and a problem occurs. The specific types of problems that occur will be described hereinafter.

Referring to the processing example shown in FIG. 2, if the erroneous TSP 21 is a video TSP, detachment of video ES 23 by TSD 11 is carried out by splicing video TSP 20 and video TSP 22 located before and after the discarded TSP 21. In the detached video ES 23, discontinuity 24 is a splice portion of video TSP 20 and video TSP 22 before and after the discarded erroneous TSP 21. Thus, discontinuity 24 destroys the continuity of ES data.

Now, let's look at data in the vicinity of discontinuity 24 in bit units. If the first 16 bits from the lead bit are subjected to decoding of a variable length code (VLC), the first 7 bits from the lead bit are normal. However, bits 8 to 16 constitute data following discontinuity 24. Thus, 16-bit VLC data becomes erroneous when all the 16 bits are read.

VDEC 12 cannot determine whether the data is normal or erroneous. If the 16-bit VLC that has been read accidentally coincides with a bit pattern in a defined table, the 16-bit VLC is decoded as normal data even though it is erroneous data.

In addition, data following discontinuity 24 also is normal data, provided the reading position is precisely searched, since erroneous TSP 21 is discarded. However, if data is read across discontinuity 24, the location where data is to be read following discontinuity 24 shifts out of position. Afterwards, there is the possibility of being unable to normally decode data even though subsequent data is normal data.

The VDEC 12 shown in FIG. 1 employs a configuration in which a VLC decoding unit 13 that uses a coprocessor (dedicated VLC decoding hardware) and a video data decoding unit 14 (decoding includes inverse quantization, inverse DCT and the like) are provided independently.

In the VDEC 12 of FIG. 1, VLC decoding unit 13 continues to operate independently to an input video ES 23. If a discontinuity 24 occurs, the VLC decoding unit 13 has no means of determining whether or not the data is discontinuous, so that the VLC decoding unit 13 will continue to process with the incorrect data reading location for data following discontinuity 24. Accordingly, there is the possibility that a normal MPEG2 video start code following discontinuity 24 is not detected. Since the start code is used as synchronous data for decoding, synchronization of processing units with the subsequent video data decoding unit 14 is lost.

If a discontinuity 24 is contained in an MPEG2 video start code, there is the possibility that the start code, which is used as synchronous data for the decoding process, is unable to be detected.

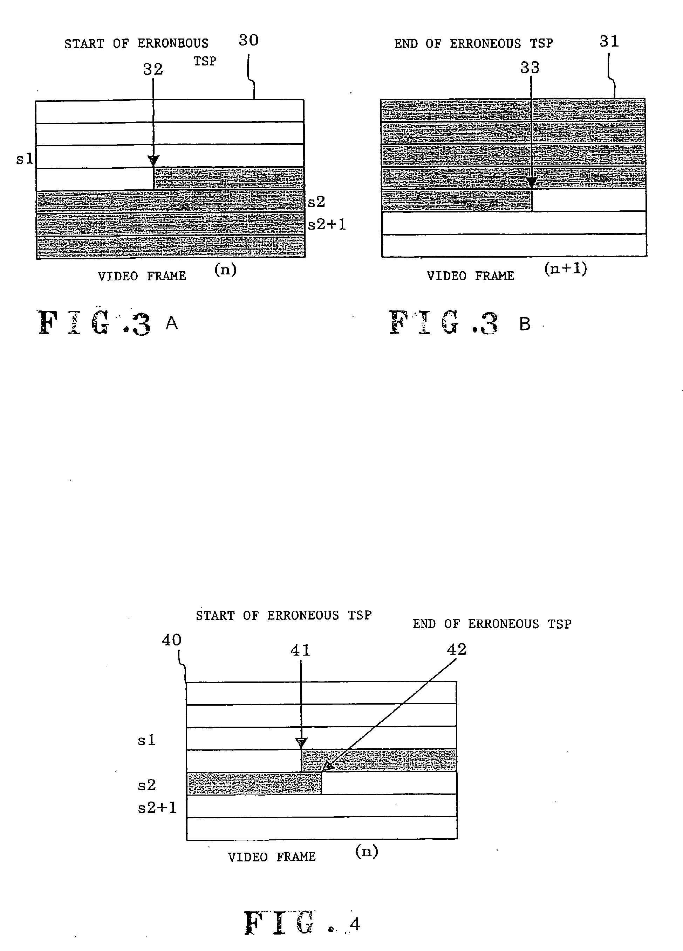

FIGS. 3A and 3B of the attached drawings show an example in which erroneous TSP 21 extends across video frames. FIG. 4 of the attached drawings shows a case in which erroneous TSP 21 extends within a single video frame without extending across the video frames. FIGS. 3A, 3B and 4 show video ES 23 in video frame units, and an erroneous TSP 21 is processed in the same manner as an error-free TSP. If an erroneous TSP 21 is discarded, the data of the erroneous TSP 21 (indicated by the hatched portions) is not present.

In FIG. 3A, start 32 of the erroneous TSP is a macroblock contained in the s1 slice layer of video frame (n) 30. In FIG. 3B, end 33 of the erroneous TSP is a macroblock contained in the s2 slice layer of video frame (n+1) 31.

If the erroneous TSP 21 extends across two video frames, the next point where normal decoding starts following synchronization is a sequence start code (0x000001B3), picture start code (0x00000100) or slice start code (0x00000101- 0x000001AF). A sequence starting from 0×01 is assigned to the lower two bytes of the slice start code. In FIG. 3A, the next point where normal decoding starts following synchronization is the slice start code of the s2+1 slice layer of video frame (n+1) 31.

In FIG. 4, start 41 of the erroneous TSP is a macroblock contained in the s1 slice layer of video frame (n) 40, and end 42 of the erroneous TSP is a macroblock contained in the s2 slice layer of the same video frame (n) 40. Even when erroneous TSP 21 does not extend across two video frames as in FIG. 4, the next point where normal decoding starts following synchronization is the slice start code of the s2+1 slice layer of video frame (n) 40. This is similar to the case where the erroneous TSP 21 extends across two video frames as shown in FIGS. 3A and 3B.

In VDEC 12, since the slice start code is from 0×00000101 to 0×000001AF and the lower two bytes are assigned in a sequence starting from 0×01, it is possible to determine in which slice layer the slice start code is present. However, it cannot be determined whether the video frame is n or n+1. Thus, VDEC 12 is unable to distinguish a case where the erroneous TSP 21 extends across two video frames as shown in FIGS. 3A and 3B from a case where the erroneous TSP 21 does not extend across two video frames as shown in FIG. 4.

If erroneous TSP 21 extends across a single GOP (group of pictures), i.e., if a sequence header is contained in erroneous TSP 21), VDEC 12 can mistakenly use the sequence header information.

Next, a description is provided of problems regarding synchronization between TSD 11 and VDEC 12 in the system shown in FIG. 1. TSD 11 writes video ES 23 data into an arbitrary memory area capable of being read by VDEC 12, namely an ES buffer. VDEC 12 synchronizes with TSD 11 while checking the writing status of video ES 23 data, and then reads and decodes the data from the ES buffer.

For example, if this synchronization is carried out in frame units, TSD 11 is able to determine a video frame unit based on the presence or absence of a PES header. In this case, TSD 11 establishes the synchronization of the decoding based on this information. In contrast, since VDEC 12 is unable to determine PES header information, it establishes the synchronization based on a picture start code (0×00000100). If an error exists in these picture start codes (0×00000100) despite the PES header being normal, there is the risk of synchronization being unable to be carried out properly resulting in a shift in output timing.

### DISCLOSURE OF THE INVENTION

An object of the present invention is to provide a digital broadcast receiver that can perform appropriate decoding, in spite of transmission errors between a digital broadcast station and digital broadcast receiver, even if the digital broadcast receiver has independent TSD and VDEC.

According to one aspect of the present invention, there is provided a digital broadcast receiver that receives a TS carrier signal transmitted from a digital broadcast station, and reproduces a video signal and an audio signal contained in the received TS carrier signal. This digital broadcast receiver includes a demodulation unit that acquires a TSP sequence by demodulating the received TS carrier signal, and detects at least one erroneous TSP containing a transmission error. The digital broadcast receiver also includes a demultiplexer that separates a video TSP and the erroneous TSP from the TSP sequence as a video TSP sequence, and converts the video TSP sequence to an ES sequence after replacing one or a plurality of continuous erroneous TSP with a single unique data fragment. The digital broadcast receiver also includes a video decoder that restores the video signal by carrying out decoding of the ES sequence, and carries out error processing in accordance with detection of the unique data fragment.

### BRIEF DESCRIPTION OF THE DRAWINGS

FIG. 1 is a block drawing showing an example of the system configuration of a digital broadcast receiver of the prior art;
FIG. 2 is a drawing useful to explain an example of video ES detachment processing of the prior art;
FIG. 3A and FIG. 3B show an example of processing of the prior art when an error spans two video frames;
FIG. 4 shows an example of processing of the prior art when an error does span two video frames;
FIG. 5 is a block drawing showing an example of the system configuration of a digital broadcast receiver according to an embodiment of the present invention;
FIG. 6 is a drawing for explaining video ES detachment processing by a TSD in the embodiment of the present invention;
FIG. 7 shows the details of a TSP_LOST in the embodiment of the present invention;
FIG. 8 shows an example when an erroneous TSP is detected in the embodiment of the present invention;
FIG. 9 shows an example when 16 or more continuous erroneous TSP are detected in the embodiment of the present invention; and
FIG. 10 shows the details of a USR_PES in the embodiment of the present invention.

### MODE FOR CARRYING OUT THE INVENTION

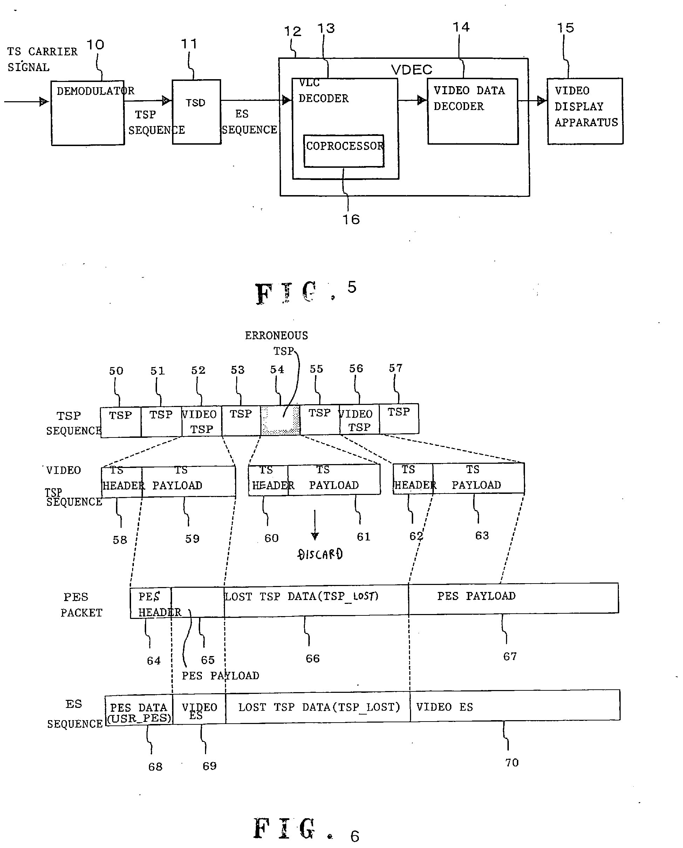

The following provides an explanation of a digital broadcast receiver according to an embodiment of the present invention with reference to FIG. 5.

This digital broadcast receiver is an apparatus for receiving a TS carrier signal transmitted from a digital broadcast station and reproducing a video signal and an audio signal contained in the received TS carrier signal. The digital broadcast receiver includes a demodulation unit 10, a demultiplexer 11 (to be referred to as TSD 11), a video decoder 12 (to be referred to as VDEC 12) and a video display apparatus 15. The demodulation unit 10 has a function for obtaining a TSP sequence by demodulating a TS carrier signal, and a function for detecting at least one erroneous TSP containing a transmission error. The TSD 11 has a function for separating a video TSP and the erroneous TSP from the TSP sequence to obtain a video TSP sequence, and a function for converting the video TSP sequence to an ES sequence after having replaced one or a plurality of continuous erroneous TSP with a single unique data fragment. The VDEC 12 has a function for restoring the video signal by carrying out decoding of the ES sequence, and a function for carrying out error processing in response to detection of the unique data fragment. The video display apparatus 15 is provided with a function for reproducing the video signal.

This digital broadcast receiver has a system configuration in which a functional block for decoding includes TSD 11 and VDEC 12 separately, as shown in FIG. 5, and the basic processing thereof is the same as the digital broadcast receiver employing a conventional system configuration. In the functional block of VDEC 12 as shown in FIG. 5, the VLC decoding unit 13 using dedicated VLC decoding hardware in the form of a coprocessor 16, and the video data decoding unit 14 for carrying out inverse quantization, inverse DCT and the like, are provided independently.

In TSD 11 of the digital broadcast receiver, detachment of video ES 23 is carried out based on identification using a PID (program ID). The PID is contained in a TS header and used when determining whether or not the TSP to be processed is a video TSP. This is done in the same manner as TSD 11 of the digital broadcast receiver of the prior art shown in FIG. 1. Judgment of whether or not an error is contained in the TSP is made based on the value of a transport error indicator of the TS header. TSD 11 discards the TSP irrespective of the PID if an erroneous TSP 21 is detected.

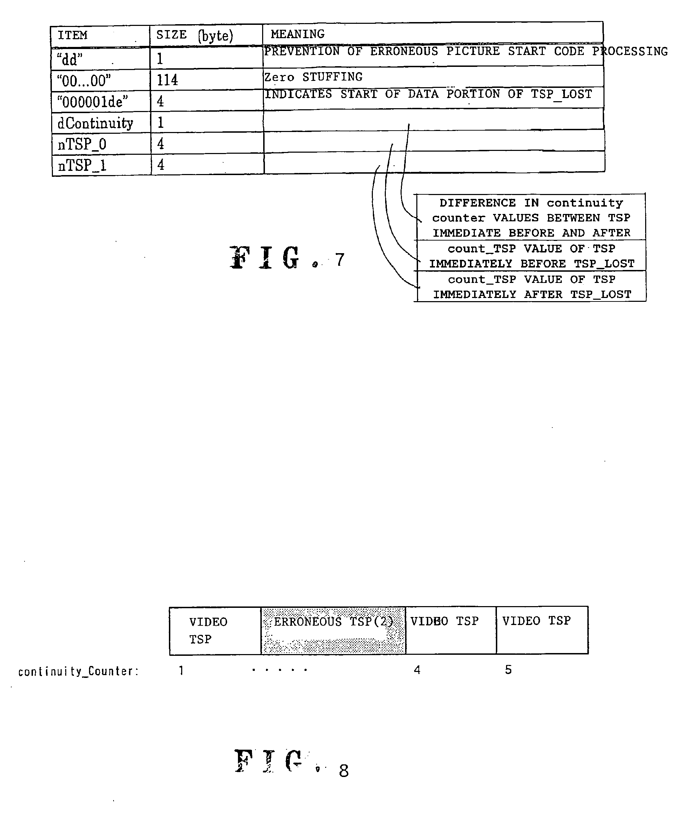

FIG. 6 shows processing when TSD 11 of the digital broadcast receiver detects a TSP. TSD 11 of the digital broadcast receiver of the present embodiment detects an erroneous TSP 54 , TSD 11 carries out ordinary processing, which is to be done by the digital broadcast receiver of the prior art, and also carries out the insertion of a unique data fragment in the form of lost TSP information (referred to as TSP_LOST 66) at the location of discarded erroneous TSP 54. VDEC 12 located downstream of TSD carries out error processing using the information of this TSP_LOST 66. FIG. 7 shows the details of TSP_LOST 66.

TSD 11 is unable to determine whether or not the erroneous TSP 54 is a video TSP based on the TSP when the erroneous TSP 54 is detected. Therefore, TSD 11 determines whether or not the erroneous TSP 54 is a video TSP using a continuity counter contained in TS headers 58, 60 and 62.

When an erroneous TSP 54 is detected, and the difference in continuity counter values contained in the TS headers of video TSP 52 and video TSP 56 located before and after the erroneous TSP 54 is greater than 1, then TSD 11 judges that the erroneous TSP 54 is a video TSP and inserts TSP_LOST 66.

FIG. 8 illustrates an example when an erroneous TSP is detected and the difference in continuity counter values is greater than 1. In the illustrated example, the difference in continuity counter values is 3, two erroneous TSP are judged to be video TSP, and TSP_LOST is inserted.

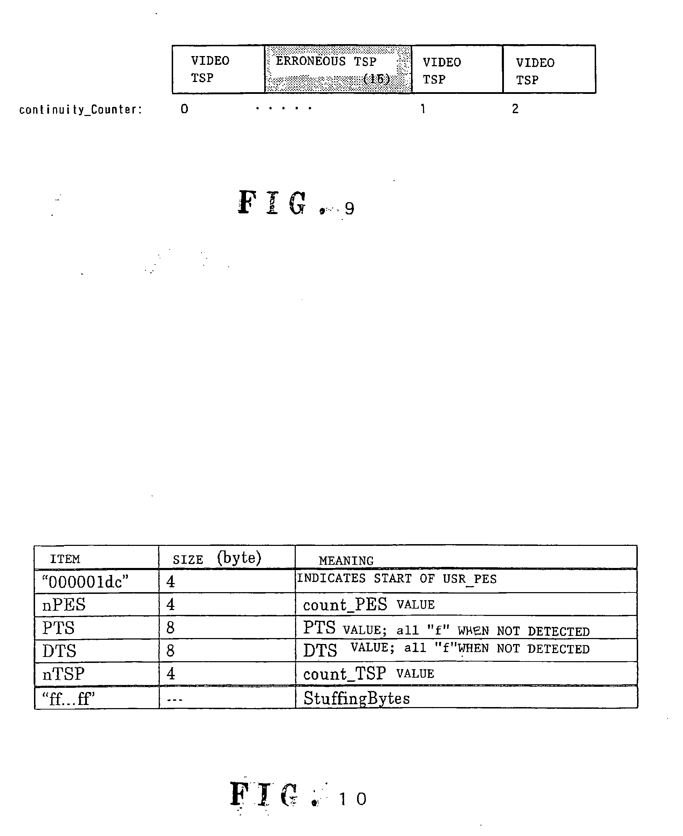

FIG. 9 illustrates an example when 16 or more continuous erroneous TSP are detected. In the illustrated example, the difference in continuity counter values is 1, 16 erroneous TSP are judged to be video TSP, and TSP_LOST is inserted. If TSD 11 detects 16 or more continuous erroneous TSP 54, continuity counter values are in the form of 4-bit data that repeats counting from 0 to 15. Thus, even if the difference in continuity counter values between video TSP 52 and video TSP 56 before and after the erroneous TSP 54 is 1, there is the possibility that an erroneous TSP 54 of a video TSP is contained. In this case as well, TSD 11 inserts TSP_LOST 66. The value of the difference in continuity counter values of the video TSP before and after the erroneous TSP 54 is inserted into TSP_LOST 66 in the form of information to be transmitted to the latter stage (i.e., VDEC 12). When the difference is 1, a judgment as to whether or not an erroneous TSP 54 is contained in the video TSP is made by VDEC 12.

If an error detected by TSD 11 does not consist of 16 or more continuous errors, and the difference in continuity counter values between video TSP 52 and 56 before and after erroneous TSP 54 is 1, then it is determined that a video TSP in the form of erroneous TSP 54 is not contained. The serial numbers of erroneous TSP 54 and video TSP 52 and 56 are inserted into TSP_LOST 66 in the form of information to be transmitted to the latter stage VDEC 12. The latter stage VDEC 12 determines, based on this information, whether or not the erroneous TSP 54 extends across video frames.

If TSD 11 detects an erroneous TSP 54 and TSP_LOST 66 is inserted instead of the erroneous TSP 54, VLC processing coprocessor 16 of the digital broadcast receiver operates independently. Thus, video data decoding unit 14 has no way of knowing that TSP_LOST 66 has been inserted. Therefore, TSD 11 inserts, at the start of TSP_LOST 66, a code that enables VLC processing coprocessor 16 to interrupt VLC decoding. Since a VLC of an MPEG2 video never becomes 0 up to 114 bytes or more, TSD 11 inserts a 114-byte NULL (0×00) into TSP_LOST 66. As a result, VLC coprocessor 16 is able to interrupt VLC decoding, and video data decoding unit 14 is able to determine information and the accurate location of an error within TSP_LOST 66.

As mentioned above, a 114-byte NULL (0x00) is inserted into the start of TSP_LOST 66 inserted by TSD 11. If the code immediately before erroneous TSP 54 is a start code 0x000001 of MPEG2 specifications, it becomes 0x00000100. This is a picture start code of MPEG2 video specifications. As a result of TSP_LOST 66 being inserted, the latter-stage VDEC 12 carries out incorrect processing. In order to prevent this, TSD 11 further inserts 0xdd in front of the 114-byte NULL (0x00). If the code immediately before erroneous TSP 54 is 0x000001, a code connection results in the form of 0x000001dd. This code does not exist among the start codes of MPEG2 video specifications. Thus, this code is not mistakenly processed as a picture start code as a result of having inserted TSP_LOST 66.

TSD 11 inserts a code 0x000001de indicating the start of the information portion of TSP_LOST 66 after having inserted the 114-byte NULL (0x00). This code does not exist among the start codes of MPEG2 specifications, like 0x000001dd. Once the latter-stage VDEC 12 detects the start code 0x000001de of the information portion of TSP_LOST 66, VDEC 12 considers that TSD 11 has detected an erroneous TSP 54, and begins error processing.

TSD 11 analyzes the PES header for video TSP in which the payload unit start indicator in TS headers 58, 60 and 62 (indicating that the first byte of the PES is contained in the TSP) is 1, and replaces PES header 64 with PES header information 68 having a user-specific format (to be referred to as USR_PES 68). TSD 11 then inserts this USR_PES 68 in front of video ES 69.

Since PES are packetized so as to be the first byte of TSP, video TSP in which the payload start indicator of TS headers 58, 60 and 62 is 1 can be judged to be TSP at the start of a video frame. Thus, decoding synchronization between TSD 11 and VDEC 12 in frame units can be realized by USR_PES 68.

FIG. 10 shows the details of USR_PES 68. A serial number (to be referred to as a count_PES) is assigned to USR_PES 68. The latter-stage VDEC 12 determines based on the count_PES whether or not continuous erroneous TSP 54 extends across frames.

If compared with a digital broadcast receiver having a system configuration of the prior art as shown in FIG. 1, when TSD 11 detects an erroneous TSP 21 in a video TSP, the digital broadcast receiver of this embodiment informs VDEC 12 of the erroneous TSP 21 location by inserting a unique data fragment in the form of lost packet information. A code, which is uniquely identified during decoding by VDEC 12, is inserted into the lost package information. As a result, TSD 11 and VDEC 12 properly synchronize with each other and operate appropriately.

This application is based on Japanese Patent Application No. 2005-272105 filed on September 20, 2005, and the entire contents thereof are incorporated herein by reference.

## Claims

1. A digital broadcast receiver that receives a TS carrier signal transmitted from a digital broadcast station, and reproduces a video signal and an audio signal contained in the received TS carrier signal, the digital broadcast receiver comprising:
a demodulation unit that obtains a TSP sequence by demodulating the received TS carrier signal, and detects at least one erroneous TSP containing a transmission error;
a demultiplexer that separates a video TSP and said erroneous TSP from said TSP sequence as a video TSP sequence, replaces one or a plurality of continuous erroneous TSP with a single unique data fragment, and converts said video TSP sequence to an ES sequence; and
a video decoder that restores said video signal by carrying out decoding of said ES sequence, and carries out error processing in response to detection of said unique data fragment.

2. The digital broadcast receiver according to claim 1,
wherein said demultiplexer has means for inserting a code capable of being uniquely identified during said decoding into said unique data fragment.

3. The digital broadcast receiver according to claim 2,
wherein said unique data fragment contains information indicating the number of erroneous TSP replaced with itself.

4. The digital broadcast receiver according to claim 2,
wherein said unique data fragment contains a code for preventing misrecognition with a picture header.

5. The digital broadcast receiver according to claim 2,
wherein said unique data fragment contains a code for preventing misrecognition with a VLC code.

6. The digital broadcast receiver according to claim 1,
wherein said demultiplexer includes means for recognizing a PES packet in which said ES sequence is packetized, generating PES header information from header information of said PES packet, and inserting said PES header information into said ES sequence.

7. The digital broadcast receiver according to claim 6,
wherein said video decoder recognizes a plurality of frames based on said PES header information, and executes said decoding for each of said plurality of frames.

8. The digital broadcast receiver according to claim 6,
wherein said PES header information contains a code capable of being uniquely identified during said decoding.
